**Europäisches Patentamt**

**European Patent Office**

**Office européen des brevets**

(19)

(11) Veröffentlichungsnummer: **0 500 562 B1**

# EUROPÄISCHE PATENTSCHRIFT

(12)

(45) Veröffentlichungstag der Patentschrift: **22.06.94**

(51) Int. Cl.$^5$: **B60T 8/78**, B60T 8/60

(21) Anmeldenummer: **90915303.3**

(22) Anmeldetag: **18.10.90**

(86) Internationale Anmeldenummer:
**PCT/EP90/01761**

(87) Internationale Veröffentlichungsnummer:
**WO 91/06457 (16.05.91 91/11)**

(54) **SCHALTUNGSANORDNUNG ZUR AUFBEREITUNG DES AUSGANGSSIGNALS EINES DREHZAHLSENSORS.**

(30) Priorität: **06.11.89 DE 3936831**

(43) Veröffentlichungstag der Anmeldung:
**02.09.92 Patentblatt 92/36**

(45) Bekanntmachung des Hinweises auf die Patenterteilung:
**22.06.94 Patentblatt 94/25**

(84) Benannte Vertragsstaaten:
**DE ES FR GB IT**

(56) Entgegenhaltungen:
**EP-A- 0 140 861**
**EP-A- 0 214 921**
**DE-A- 3 234 637**
**DE-A- 3 543 058**
**US-A- 3 840 277**

(73) Patentinhaber: **ITT Automotive Europe GmbH**
**Guerickestrasse 7**
**D-60441 Frankfurt(DE)**

(72) Erfinder: **BLECKMANN, Hans-Wilhelm**
**Fröbelstrasse 2**
**D-6350 Bad Nauheim 3(DE)**
Erfinder: **LORECK, Heinz**
**Rosenweg 16**
**D-6270 Idstein 2(DE)**
Erfinder: **ZYDEK, Michael**
**Kurmainzer Strasse 40**
**D-6230 Frankfurt/Main 80(DE)**
Erfinder: **FEY, Wolfgang**
**Raugrafenstrasse 8**
**D-6501 Wörrstadt(DE)**

EP 0 500 562 B1

## Beschreibung

Die Erfindung bezieht sich auf eine Schaltungsanordnung zur Aufbereitung des Ausgangssignals eines Drehzahlsensors, dessen Frequenz zur Bestimmung der Drehzahl ausgewertet wird, dessen Amplitude jedoch ebenfalls von der Drehzahl abhängig ist. Solche Drehzahlsensoren werden beispielsweise für Antiblockiersysteme (ABS) oder zur Antriebsschlupfregelung (ASR) benötigt.

Aus der DE-OS 32 34 637 ist bereits eine Schaltungsanordnung dieser Art bekannt, mit der die Sensorsignale für ein elektronisches Antiblokkiersystem aufbereitet werden. Mit Hilfe der Sensorsignale werden die zur Regelung benötigten Informa- tionen über das Raddrehverhalten gewonnen. Hierzu rotiert mit dem Rad eine Zahnscheibe, die mit einem feststehenden induk- tiven Meßwertaufnehmer zusammenwirkt, dessen Ausgangssignal in Form einer Wechselspannung vorliegt, die in ihrer Frequenz und in ihrer Amplitude zur Raddrehzahl proportional ist. Mit Hilfe einer Triggerschaltung werden die Sensorsignale aufbe- reitet, d.h. verstärkt und in ein Rechtecksignal oder eine Impulsfolge umgewandelt, deren Frequenz der Drehzahl entspricht. Die Triggerschaltung enthält außerdem Filter, mit denen Störsignale soweit wie möglich gedämpft werden.

Die starke Abhängigkeit der Amplitude von der Drehzahl hat zur Folge, daß bei geringen Radgeschwindigkeiten die Ausgangssignale so schwach werden, daß sie nur durch zusätzliche Maßnahmen von den unvermeidlichen Störsignalen zu unterscheiden sind. Da die in dem Meßwertaufnehmer induzierte Spannung außerdem erheblich von dem Luftspalt zwischen dem Meßwertaufnehmer und der Zahnscheibe und damit von Einbautoleranzen, Exzentrizitäten des Rades oder der Lagerung des Rades usw. abhängig ist, kann das Ausgangssignal bei gleichen Raddrehzahlen sehr unterschiedliche Amplituden annehmen und unter ungünstigen Umständen, d.h. bei geringer Drehzahl und großem Luftspalt, außerordentlich schwach werden. Dies gilt auch dann, wenn durch aufwendiges Nacharbeiten und Justieren die mechanischen Toleranzen klein gehalten werden.

Es wurden auch schon ein Verfahren und eine Schaltungsanordnung zur Aufbereitung der Sensor-Ausgangssignale entwickelt und in der DE-OS 35 43 058 beschrieben, das bzw. die eine verbesserte Trennung von Störsignal und Nutzsignal zum Gegenstand haben. Hierzu werden zwischen dem Sensorausgang und der Triggerschaltung zwei Tiefpässe angeordnet, die einerseits ein Nutzsignal und andererseits ein Bezugssignal erzeugen. Die beiden Signale werden verglichen. In Abhängigkeit von der Differenz der beiden Signale wird mit Hilfe eines Komparators ein pulsförmiges Ausgangssignal, nämlich das aufbereitete Sensorsignal, erzeugt. Das Bezugssignal wird mit Hilfe eines Regelsignals, welches durch eine Anpassungsschaltung gewonnen wird, dem Nutzsignal dynamisch nachgeführt.

Die starke Abhängigkeit der Amplitude des Sensor-Ausgangssignals von der Drehzahl und von dem Luftspalt zwischen dem Meßwertaufnehmer und der Zahnscheibe erschwert jedoch nach wie vor die Auslegung einer solchen Triggerschaltung. Die Ansprechschwelle muß mit Rücksicht auf den größten Luftspalt, der im Toleranzbereich zulässig ist, und auf die geringste Geschwindigkeit, auf die der Regler reagiert, recht tief gelegt werden, beispielsweise auf 100 mV, damit die Triggerschaltung auch in diesem Extremfall sicher anspricht. Bei einem zufällig bzw. toleranzbedingt kleinen Luftspalt und einem daraus folgenden relativ starken Störsignal besteht jedoch dann die Gefahr, daß die Triggerschwelle durch dieses Störsignal ebenfalls erreicht wird. Durch das bekannte Radieren der Reifen über der Fahrbahn, das sog. "Reibschwingungen" erzeugt, durch dynamische Luftspaltveränderungen infolge von Fahrbahnstößen und auf vielen anderen Wegen entstehen Störsignalpegel, die größer sind als die Ansprechschwelle, die für den unteren Grenzbereich ausgelegt ist.

Der Erfindung liegt daher die Aufgabe zugrunde, die geschilderten Nachteile zu überwinden und eine Schaltungsanordnung zu entwickeln, die einerseits sehr empfindlich auf Nutzsignale anspricht und dennoch auf Störsignale der geschilderten, in der Praxis auftretenden Art nicht reagiert.

Es hat sich gezeigt, daß diese Aufgabe mit einer Schaltungsanordnung der eingangs genannten Art gelöst werden kann, die im wesentlichen aus einer Kippschaltung oder Triggerschaltung besteht, deren Umschaltpunkte oder "Hysterese" steuerbar sind, und die mit Schaltkreisen zur Ermittlung eines Kopplungsfaktors, der multipliziert mit der der Drehzahl entsprechenden Frequenz des Sensorsignals die Amplitude des Sensor-Ausgangssignals ergibt, und mit Schaltkreisen zur Einstellung der Hysterese der Triggerschaltung in Abhängigkeit von dem Kopplungsfaktor ausgerüstet ist.

Durch die selbsttätige Errechnung des Kopplungsfaktors und die entsprechende Einstellung der Hysterese wird also erreicht, daß z.B. bei zufällig kleinem Luftspalt, der sowohl zu hohen Nutz- als auch zu relativ hohen Störsignalen am Ausgang des Sensors führt, die Triggerschwelle hochgelegt wird. Andererseits ist bei großem Luftspalt, der die Nutzsignale ebenso wie die Störsignale schwächt, die Ansprechschwelle des Triggers niedrig. Es werden also gewissermaßen die unvermeidlichen Einbautoleranzen des Sensors durch Anpassung der Triggerschaltung bzw. der Hysterese der Triggerschaltung ausgeglichen. Da der Kopplungsfaktor in einem Ausführungsbeispiel im Verhältnis 1:20 (d.h. zwischen 3 und 60 mV/Hz) schwanken kann, ist diese Anpassung für die Unterdrückung von Störsignal-Auswirkungen von großer Bedeutung. Der Störabstand läßt sich nahezu um den gleichen Faktor anheben.

Die erfindungsgemäße Anpassung der Hysterese an den Kopplungsfaktor führt zu Einsparungen am Sensor und an dessen Einbau. Im Vergleich zu bisherigen Lösungen sind höhere Einbautoleranzen zulässig. An die Signalübertragung zwischen dem Sensor und der Elektronik werden geringere Anforderungen gestellt, weil die Auswirkung von Störsignalen geringer wird. Die Vermeidung oder erhebliche Reduzierung von Triggerfehlern führt zur Verbesserung der Regelqualität des Blockierschutzoder Antriebsschlupfregelungssystems.

Nach einer vorteilhaften Ausführungsart der Erfindung ist die Hysterese der Triggerschaltung auf die Amplitude des Signals abgestimmt, das bei der geringsten zu bestimmenden Drehzahl am Ausgang des Sensors anliegt.

Ferner kann die Schaltung so ausgelegt werden, daß die Hysterese mit zunehmender Drehzahl bzw. Frequenz kontinuierlich oder in Stufen ansteigt. Die Abhängigkeit kann derart gewählt sein, daß der Abstand zwischen dem zulässigen Störpegel und dem Nutzsignal über den gesamten Drehzahlbereich annähernd gleich bleibt.

Eine weitere vorteilhafte Ausführungsart der Erfindung besteht darin, daß der Einfluß des Kopplungsfaktors auf die Hystereseanhebung in Abhängigkeit von der ansteigenden Frequenz des Sensorsignals bzw. von der Geschwindigkeit eines Kraftfahrzeugs, bezogen auf den Eintritt eines vorgegebenen, regelmäßig wiederkehrenden Ereignisses, z.B. dem Betätigen der Zündung, gewichtet bzw. variiert wird. Bei relativ geringer Geschwindigkeit ist nämlich die Wahrscheinlichkeit, daß der Kopplungsfaktor richtig erkannt wurde, geringer als bei höherer Geschwindigkeit, weshalb die Schaltungsanordnung zweckmäßigerweise so ausgelegt ist, daß der Einfluß des Kopplungsfaktors auf die Hystereseanhebung mit ansteigender Drehzahl bzw. Frequenz des Sensor-Ausgangssignals kontinuierlich oder in mehreren Stufen zunimmt. Bei Abnahme der Fahrzeuggeschwindigkeit bleibt dieser höhere Einfluß auf die Hystereseanhebung erhalten. Erst nach der nächsten Zündungsbetätigung wird wieder stufenweise oder kontinuierlich der Einfluß des Kopplungsfaktors auf die Hystereseanhebung erhöht.

Weitere Merkmale, Vorteile und Anwendungsmöglichkeiten der Erfindung gehen aus der folgenden Darstellung anhand der beigefügten Abbildungen hervor.

Es zeigen

Fig. 1    in extremer Vereinfachung das Prinzip der erfindungsgemäßen Schaltungsanordnung und

Fig. 2    im Blockschaltbild ein Ausführungsbeispiel der Schaltung nach Fig. 1 und

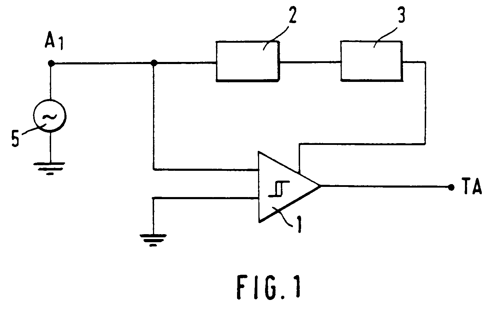

Nach Fig. 1 besteht die erfindungsgemäße Schaltungsanordnung im Prinzip aus einer Kippschaltung oder Triggerschaltung 1 mit veränderlicher, steuerbarer Hysterese, aus einem Schaltkreis 2 zur Errechnung des Kopplungsfaktors k und aus einem weiteren Schaltkreis 3 zur Errechnung der Hysterese bzw. der Umschaltpunkte der Triggerschaltung 1 in Abhängigkeit von dem ermittelten, tatsächlich vorhandenen Kopplungsfaktor k und zur Erzeugung eines den Arbeitspunkt und die Hysterese der Triggerschaltung 1 bestimmenden Signals. Mit Hilfe dieser Schaltungsanordnung wird das Ausgangssignal eines Radsensors 5 aufbereitet. Aus diesem Sensorsignal, das in seiner Frequenz und seiner Amplitude von der Raddrehzahl abhängig ist, wird ein Rechtecksignal oder eine Pulsfolge, deren Frequenz oder Pulsabstand ein Maß für die Drehzahl ist, abgeleitet und am Ausgang TA der Schaltung zur Verfügung gestellt. Das Signal am Ausgang TA ist weitgehend von Störungen oder Fehlin£ormationen bereinigt und kann z.B. in der (nicht dargestellten) Reglerelektronik eines ABS weiterverarbeitet werden.

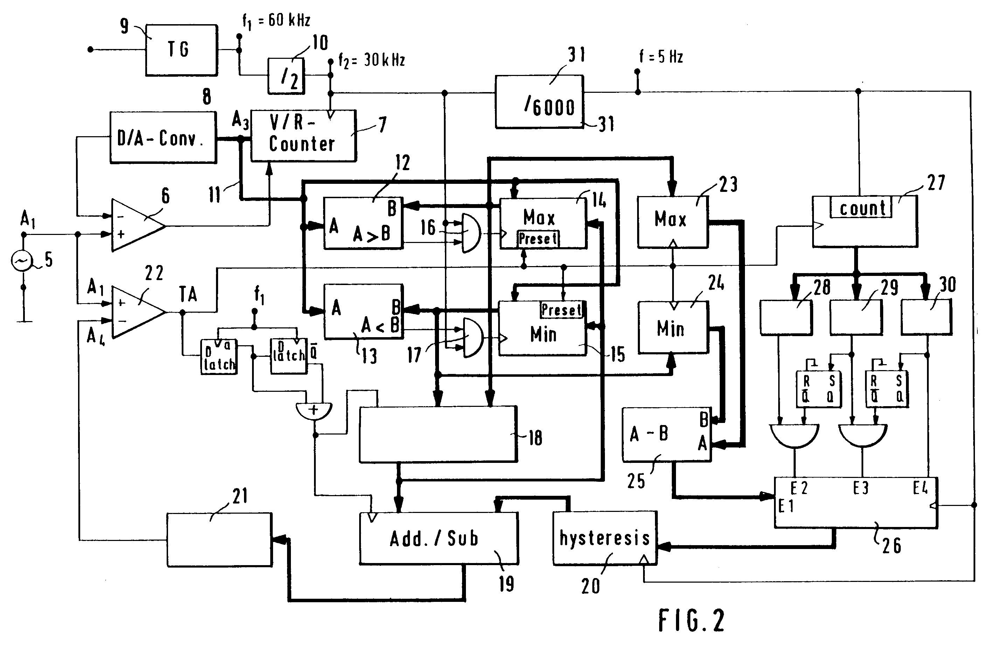

Fig. 2 zeigt eine Möglichkeit zur Realisierung der Schaltung nach Fig. 1 mit Hilfe von digital arbeitenden Schaltkreisen.

Das an dem Ausgang $A_1$ des Radsensors 5 zur Verfügung stehende Signal des Radsensors 5 wird zunächst mit Hilfe eines Komparators 6, eines Vorwärts-Rückwärtszählers 7 und eines Digital-Analog-Wandlers 8 in ein digitales, elektronisch weiterverarbeitbares Signal umgesetzt. Je nach dem Zustand des Ausgangssignals (high oder low) des Komparators 6, das wiederum von der Differenz der beiden Eingangssignale dieses Komparators bestimmt wird, zählt der Zähler 7 entweder vorwärts oder rückwärts. Der Arbeitstakt für diesen Zähler und für die anderen Baustufen der in Fig. 2 gezeigten Schaltung wird mit Hilfe eines Taktgebers 9, dessen Frequenz erforderlichenfalls, wie hier durch einen Teiler 10, untersetzt werden kann, erzeugt. In einem Ausführungsbeispiel der Erfindung betrug die Taktgeberfrequenz 60 kHz und wurde in der Stufe 10 auf 30 kHz herabgesetzt. Der Zählerstand am Ausgang $A_3$ wird nach Umwandlung in ein analoges Signal mit dem Sensorausgangssignal $A_1$ verglichen.

Außerdem wird der Zählerstand $A_3$ über eine Mehrfachleitung 11, z.B. einer 8 bit-Datenleitung, Vergleichern 12,13 zugeführt und in diesen einerseits mit dem gespeicherten Maximalwert (im Vergleicher 12) und andererseits mit dem gespeicherten Minimalwert (im Vergleicher 13) des Zählerstandes verglichen. Diese Maximal- bzw. Minimalwerte werden in den Speichern 14,15 gebildet, deren Eingänge ebenfalls an die Datenleitung 11 angeschlossen sind. Über ein UND-Gatter 16, das ebenfalls an den Arbeitstakt angeschlossen ist und den Arbeitsablauf synchronisiert, wird der Speicherinhalt des Maximumspeichers 14 erhöht, wenn der Zählerstand A am Eingang des Vergleichers 12 größer ist als der gespeicherte, dem zweiten Eingang B des Vergleichers 12 zugeführte Maximalwert. In entsprechender Weise wird der Speicherinhalt des Minimumspeichers 15 korrigiert, wenn der Wert am Eingang A des Vergleichers 13 geringer ist als der Wert am Eingang B bzw. als der Inhalt des Minimumspeichers 15.

Die Ausgangssignale des Maximum- und des Minimumspeichers 14 bzw. 15 werden einem Addierer 18 zugeführt, um den Mittelwert des Sensorausgangssignales zu bestimmen. Der Ausgang des Addierers 18 führt zu einer Addier-/Subtrahierstufe 19, die zu dem Mittelwert einen die errechnete "Hysterese" repräsentierenden Wert addiert oder subtrahiert, so daß schließlich am Ausgang dieser Stufe 19 ein aus dem Mittelwert und der errechneten Hysterese abhängiger Wert ansteht, der nach Umwandlung in einen entsprechenden Analogwert mit Hilfe eines Digital/Analogwandlers 21 den Arbeitspunkt einer Triggerstufe 22, die der Triggerschaltung 1 nach Fig. 1 entspricht, festlegt. Das Ausgangssignal des Addierers 18, das den Mittelwert repräsentiert, wird außerdem zu den Speichern 14,15 zurückgeführt. Das zweite Eingangssignal der Triggerstufe 22 ist das Ausgangssignal $A_1$ des Sensors 5. Der Pegel am Eingang A der Triggerschaltung 22 stellt, genauer gesagt, nicht den Arbeitspunkt, sondern den Arbeitspunkt ± Hysterese dar. Am Ausgang TA der Triggerschaltung 22 steht das aufbereitete Signal des Radsensors 5 zur Verfügung; es ist ein Rechtecksignal, das ggf. noch in eine Pulsfolge verwandelt werden kann.

Der maximale und minimale Zählerstand wird außerdem bei jeder positiven Flanke des Ausgangssignals TA der Triggerschaltung 22 in den Speicherschaltungen 23,24 festgehalten. Die Amplitude des Sensorsignals läßt sich dann mit Hilfe eines Differenzbildners 25 bestimmen. Bei jeder positiven Flanke des Ausgleichssignal TA wird zusätzlich der maximale Zählerstand im Speicher 14 auf den Mittelwert zurückgesetzt. Bei jeder negativen Flanke wird der maximale Zählerstand im Speicher 15 auf den Mittelwert zurückgesetzt. Dies ist nötig, um die jeweils aktuelle Amplitude sowie den Mittelwert zu erfassen.

Diese Amplitude des Sensorsignals in Abhängigkeit von der Drehzahl bzw. der dieser Drehzahl entsprechenden Frequenz ermöglicht die Errechnung des Kopplungsfaktors nach der Formel

$$U_{Sensor} = k \times f,$$

wobei die Meßfrequenz f bei einer Zähnezahl des (nicht dargestellten) Sensorrades von ungefähr 50 zwischen etwa 30 und 2000 Hz liegt; diese Aufgaben beziehen sich auf einen Radsensor für ein KFZ-Antiblockiersystem.

Erfindungsgemäß werden dann in Abhängigkeit von diesem Kopplungsfaktor die Hysterese bzw. die Umschaltpunkte der Triggerschaltung 22 (bzw. 1 in Fig. 1) festgelegt.

Die in dem Differenzbildner 25 ermittelte Sensoramplitude wird mit Hilfe einer Teilerschaltung 26 mit der Raddrehzahl bzw. der der Raddrehzahl entsprechenden Frequenz in Relation gesetzt und gewichtet. Das Ausgangssignal dieser Teilerschaltung wird in einem Speicher 20 festgehalten und, wie bereits beschrieben, in den Stufen 19 und 21 zur Arbeitspunktfestlegung (Arbeitspunkt ± Hysterese) weiterverarbeitet. Zur Wichtung der mit der Schaltung 25 ermittelten Amplitude und zur Festlegung, wie hoch der Beitrag der Amplitude zur Korrektur der Hysterese sein soll, werden der Teilerschaltung 26 über einen Zähler 27 und über mehrere Vergleicher 28 bis 30 signalisiert, welche Geschwindigkeit bzw. welche Signalfrequenz inzwischen erreicht wurde. Der Zähler 27 wird über einen Teiler 31, der hier die Frequenz des Taktes am Ausgang der Stufe 10 auf 5 Hz reduziert, für eine halbe Periode (10 ms) aktiviert. In dieser Zeit zählt der Zähler 27 nach Fig. 2 die positiven Flanken des Triggerausgangssignals TA. Das Ausgangssignal des Zählers 27 ist somit nach Abschluß des Zählvorgangs ein Maß für die Sensorfrequenz.

Wird z.B. beim Anfahren eines Kraftfahrzeuges eine untere Geschwindigkeitsschwelle erreicht, die nach Fig. 2 einem Signal von 40 Hz entspricht, wird von dem ersten Vergleicher 28 ein entsprechendes Signal der Teilerschaltung 26 zugeführt. Bei dieser verhältnismäßig geringen Fahrzeuggeschwindigkeit wird die Messung des Kopplungsfaktors k noch als relativ unsicher angesehen. Der Einfluß des momentan gemessenen Kopplungsfaktors bzw. der entsprechenden Amplitude auf die Korrektur der Hysterese wird daher relativ gering gehalten.

Sobald eine höhere Geschwindigkeit erreicht wird, die hier z.B. zu einem Signal von 60 Hz führt, signalisiert dies der Vergleicher 29, was über das angedeutete Flipflop und das ODER-Gatter zu einem Sperren des von dem Vergleicher 28 stammenden Signals und zur Ansteuerung des Einganges $E_3$ der Teilerschaltung 26 führt. Der bei dieser höheren Geschwindigkeit gemessene Kopplungsfaktor k ist "sicherer" und dessen Einfluß auf die Hysteresenachführung daher höher als bei der zuvor beschriebenen geringeren Geschwindigkeit, die zu einem Signal am Eingang $E_2$ führte. Bei noch höherer Geschwindigkeit (120 Hz) erzeugt der Vergleicher 30 das Eingangssignal $E_4$. Der bei dieser Geschwindigkeit gemessene Kopplungsfaktor wird am höchsten gewichtet.

Wird eine höhere Geschwindigkeit erreicht, bleibt die durch die höhere Wichtung eingestellte Hysterese auch dann erhalten, wenn das Fahrzeug wieder langsamer wird. Eine Zurückschaltung auf die Stufe mit geringster Wichtung wird von bestimmten Ereignissen abhängig gemacht, beispielsweise von dem Betätigen der Zündung. Natürlich ist die beschriebene Art der Wichtung und die Zurückstellung beim Ausschalten der Zündung nur eine von mehreren zweckmäßigen Möglichkeiten.

Die erfindungsgemäße Schaltungsanordnung ist gegenüber Störsignalen wesentlich unempfindlicher, weil die Kippunkte bzw. die Hysterese der Triggerschaltung nicht mehr auf den ungünstigsten Fall - z.B. auf den größten Luftspalt zwischen Sensor und Zahnscheibe - eingestellt werden muß, sondern weil die Hysterese selbsttätig soweit angehoben bzw. die Ansprechempfindlichkeit soweit gesenkt wird, wie es der tatsächlich vorhandene Kopplungsfaktor erlaubt. Ist der Kopplungsfaktor hoch, werden sowohl die Nutzsignale als auch die (induzierten) Störsignale relativ hoch. Durch das Anheben der Hysterese wird jedoch das Ansprechen auf diese Störsignale verhindert. Ist dagegen der Kopplungsfaktor gering, werden die Nutzsignale schwach; die Ansprechempfindlichkeit des Triggers wird hoch. Die Gefahr von Fehltriggerung besteht jedoch nicht, weil der niedrige Kopplungsfaktor auch die Störsignale schwächt. Der erreichte technische Fortschritt ist folglich erheblich.

## Patentansprüche

1. Schaltungsanordnung zur Aufbereitung des Ausgangssignals eines Drehzahlsensors, z.B. des Radsensors eines Antiblockiersystems (ABS) oder einer Antriebsschlupfregelung (ASR) für Kraftfahrzeuge, dessen Frequenz zur Bestimmung der Drehzahl ausgewertet wird, dessen Amplitude jedoch ebenfalls von der Drehzahl abhängig ist, mit einer Kipp- bzw. Triggerschaltung, die das Ausgangssignal des Drehzahlsensors verstärkt und in ein Rechtecksignal umwandelt, dadurch **gekennzeichnet,** daß die Umschaltpunkte oder "Hysterese" der Triggerschaltung steuerbar sind und daß Schaltkreise (2) zur Ermittlung eines Kopplungsfaktors (k), der multipliziert mit der der Drehzahl entsprechenden Frequenz des Sensorsignals die Amplitude des Sensor-Ausgangssignals ergibt, und Schaltkreise (3) zur Einstellung der Hysterese der Triggerschaltung in Abhängigkeit von dem Kopplungsfaktor (k) vorhanden sind.

2. Schaltungsanordnung nach Anspruch 1, dadurch **gekennzeichnet,** daß zur Ermittlung des Kopplungsfaktors (k) die Amplitude des Signals, das bei der geringsten zu bestimmenden Drehzahl am Ausgang ($A_1$) des Sensors (5) anliegt, ermittelt wird und daß die Hysterese der Triggerschaltung (1,22) auf diese Amplitude abgestimmt wird.

3. Schaltungsanordnung nach Anspruch 1 oder 2, dadurch **gekennzeichnet,** daß die Hysterese mit zunehmender Drehzahl bzw. Frequenz kontinuierlich oder in Stufen ansteigt.

4. Schaltungsanordnung nach Anspruch 3, dadurch **gekennzeichnet,** daß die Hysterese mit zunehmender Drehzahl derart ansteigt, daß der Abstand zwischen dem zulässigen Störpegel und dem Nutzsignal über den gesamten Drehzahlbereich annähernd gleich bleibt.

5. Schaltungsanordnung nach einem der Ansprüche 1 bis 4, dadurch **gekennzeichnet,** daß der Einfluß des Kopplungsfaktors (k) auf die Hystereseanhebung in Abhängigkeit von der Frequenz des Sensor-Ausgangssignals bzw. von der Geschwindigkeit eines Kraftfahrzeugs gewichtet bzw. variiert wird.

6. Schaltungsanordnung nach Anspruch 5, dadurch **gekennzeichnet,** daß der Einfluß des Kopplungsfaktors (k) auf die Hystereseanhebung mit steigender Drehzahl kontinuierlich oder in Stufen zunimmt.

7. Schaltungsanordnung nach Anspruch 5 oder 6, dadurch **gekennzeichnet,** daß das Ansteigen des Einflusses des Kopplungsfaktors (K) auf die Hysterese nach dem Eintreten eines regelmäßig wiederkehrenden Ereignisses, z.B. dem Betätigen der Zündung, erneut beginnt.

## Claims

1. A circuit configuration for editing the output signal of a speed sensor, e.g. the wheel sensor of an anti-locking control system (ABS) or a traction slip control system (TSC) for automotive vehicles, the frequency of which is analyzed for determining the rotational speed, with the amplitude thereof being, however, equally dependent on the rotational speed, comprising a sweep circuit or a trigger circuit which amplifies the output signal of the speed sensor and converts it into a square-wave signal, **characterised** in that the switch-over points or "hysteresis" of the trigger circuit are controllable, and in that circuits (2) are provided for determining a coupling factor (k) which, multiplied by the frequency of the sensor signal corresponding to the rotational speed, forms the amplitude of the output signal of the sensor, and in that circuits (3) are provided for adjusting the hysteresis of the trigger circuit in response to the coupling factor (k).

2. A circuit configuration as claimed in claim 1, **characterised** in that for determining the coupling factor (k) the amplitude of the signal, which prevails at the output ($A_1$) of the sensor (5) at the lowest rotational speed to be determined, is determined, and in that the hysteresis of the trigger circuit (1, 22) is adapted to this amplitude.

3. A circuit configuration as claimed in claim 1 or 2, **characterised** in that the hysteresis with an increasing rotational speed and frequency, respectively, rises continuously or in increments.

4. A circuit configuration as claimed in claim 3, **characterised** in that the hysteresis rises with an increasing rotational speed such that the ratio between the permitted noise level and the useful signal remains approximately constant throughout the entire rotational speed range.

5. A circuit configuration as claimed in any one of claims 1 to 4, **characterised** in that the influence of the coupling factor (k) on the hysteresis rise is weighted and varied in response to the frequency of the output signal of the sensor and of the velocity of an automotive vehicle, respectively.

6. A circuit configuration as claimed in claim 5, **characterised** in that the influence of the coupling factor (k) on the hysteresis rise increases with a rising rotational speed continuously or in increments.

7. A circuit configuration as claimed in claim 5 or 6, **characterised** in that the rising influence of the coupling factor (k) on the hysteresis recommences upon the occurrence of a regularly recurrent event, such as the actuation of the ingnition.

**Revendications**

1. Agencement de circuits pour le traitement du signal de sortie d'un capteur de vitesse, par exemple du capteur de roue d'un système de freinage antiblocage des roues (ABS) ou d'un système de régulation du patinage à l'entraînement (ASR) pour véhicules automobiles, dont la fréquence peut est évaluée en vue de déterminer la vitesse de rotation et dont l'amplitude dépend également de la vitesse de rotation, comprenant un circuit à bascule ou circuit trigger, qui amplifie le signal de sortie du capteur de vitesse et le transforme en un signal carré, caractérisé en ce que les points de basculement, ou "hystérésis", du circuit à bascule peuvent être réglés, et en ce qu'il existe des circuits de commande (2) permettant de déterminer un facteur de couplage (k) qui, multiplié par la fréquence du signal du capteur qui correspond à la vitesse de rotation, produit l'amplitude du signal de sortie du capteur, et des circuits de commande (3) permettant de régler l'hystérésis du circuit à bascule en fonction du facteur de couplage (k).

2. Agencement de circuits selon la revendication 1, caractérisé en ce qu'afin de déterminer le facteur de couplage (k), on détermine l'amplitude du signal existant au niveau de la sortie ($A_1$) du capteur (5) à la vitesse de rotation la plus basse à déterminer, et en ce que l'hystérésis du circuit à bascule (1, 22) est ajustée par rapport à cette amplitude.

3. Agencement de circuits selon l'une des revendications 1 ou 2, caractérisé en ce que l'hystérésis augmente progressivement ou par paliers au fur et à mesure qu'augmente la vitesse de rotation ou la fréquence.

4. Agencement de circuits selon la revendication 3, caractérisé en ce que l'hystérésis augmente avec la vitesse de rotation de façon telle que la distance entre le niveau de parasites admissible et le signal utile reste à peu près égale sur toute la plage de vitesses de rotation.

5. Agencement de circuits selon l'une des revendications 1 à 4, caractérisé en ce que l'influence du facteur de couplage (k) sur l'augmentation de l'hystérésis est modifiée ou pondérée en fonction de la fréquence du signal de sortie du capteur ou de la vitesse du véhicule.

6. Agencement de circuits selon la revendication 5, caractérisé en ce que l'influence du facteur de couplage (k) sur l'augmentation de l'hystérésis croît progressivement ou par paliers au fur et à mesure de l'augmentation de la vitesse de rotation.

7. Agencement de circuits selon l'une des revendications 5 ou 6, caractérisé en ce que l'augmentation de l'influence du facteur de couplage (k) sur l'hystérésis repart après l'apparition d'un événement répétitif, par exemple l'actionnement du contact d'allumage.

FIG.1

FIG.2